# EUROPEAN PATENT APPLICATION

(11) **EP 3 372 561 A1**
(43) Date of publication of application: **12.09.2018**
(21) Application number: 17382111.7
(22) Date of filing: 06.03.2017
(51) Int. Cl.: C03B 5/235, C03C 3/089, C03C 3/093, C03C 3/108, C03C 8/02, C03C 8/10, C03C 8/12

(54) **METHOD AND DEVICE FOR MANUFACTURING GLASS FRITS**

(71) Applicant: CONSEJO SUPERIOR DE INVESTIGACIONES CIENTIFICAS, 28006 Madrid (ES)
(72) Inventor: ROMERO PÉREZ, Maximina, 280033 Madrid (ES); LÓPEZ DELGADO, Aurora, 28040 Madrid (ES); ROBLA VILLALVA, Jose Ignacio, 28040 Madrid (ES)
(74) Representative: Pons

(57) **Abstract**

The present invention relates to a method for preparing glass frits by supplying the total energy required in the process by means of concentrated solar radiation. It is further related with a device for carrying out said method comprising elements such as a solar flat mirror, a solar beam shutter and a solar radiation concentrator. The device further includes means for storing, feeding and containing the raw materials. Several advantages are derived from the use of the method and device of the present invention, which can be summarized in a reduction in energy consumption and an increased productivity of the process.

## Description

The present invention falls under the field of glass frits manufacture.

It is a first object of the present invention a method for preparing glass frits by supplying the total energy required in the process by means of concentrated solar radiation.

A further object of the present invention is a device for carrying out said method comprising elements such as a solar flat mirror, a solar beam shutter and a solar radiation concentrator. The device further includes means for storing, feeding and containing the raw materials, such as:
- a raw materials hopper
- a raw materials feeder
- a crucible provided with a tipper arm placed in the focal spot of the concentrated solar radiation
- a water tank for pouring the melted raw materials provided with an articulated support.

### BACKGROUND ART

Glass frits are glassy materials prepared by melting a mixture of raw materials at high temperature. Frits are the main component of nearly all ceramic glazes. They are also present in many compositions of different materials where a glassy phase is needed as binder. Currently, on the market there are many varieties of frits, with different physicochemical characteristics: composition, phases, melting point, hardness, colour, erosion resistance, brightness, opacity, shading, etc.

Nowadays, the production of frits is conducted in continuous melting furnaces and common temperatures in furnaces range between 1350° and 1550°C. Once the raw materials batches are melted, they are cooled in water at high cooling rate; thus, the melt solidifies as small pieces of glass. This melting process implies a significant energy consumption and low efficiency and productivity of the process.

Frit manufacture is a highly intensive energy process, requiring high temperature usually provided by burning fossil fuels. The highest energy consumption of the process occurs inside the melting oven; in general, the energy necessary for melting accounts for over 75% of the total energy consumed in the frit manufacturing process. The theoretical energy required to convert the raw materials mixture into glass is around 2.7 GJ/t [(Trier, W., Glass Furnaces: Design Construction and Operation; Sheffield: Society of Glass Technology 1987, p. 80.); (Scalet, B.M., et al., 2013. European Commission. Best Available Techniques (BAT) Reference Document for the Manufacture of Glass)].

This theoretical value takes only into account the chemical heat of reaction and the enthalpy changes associated with heating up the batch from room temperature to the melting temperature. However, from a practical point of view it is required to overcome heat losses linked with upholding the glass melt temperature. The real energy consumption for modern industrial glass melting can vary from 3.5 to 40 GJ/t depending on furnace design and scale [see previous reference by Scalet B.M. et al. (2013)].

The main drawbacks of the actual procedure are: high cost of furnaces, high energy consumption, low productivity in terms of Kg/h·KJ and high CO₂ production. Thus, it is of great importance to search new sustainable processes to reduce energy requirements and moreover to eliminate fossil fuel consumption. Important research work has been carried out aimed to use concentrated solar energy (CSE) in different industrial processes, such as:
- the production of lime from limestone [A. Meier, N. Gremaud, A. Steinfeld. Energy conversion and management 46 (2005) 905],
- alumina from boehmite [I. Padilla, A. López-Delgado, S. López-Andrés, M. Álvarez, R. Galindo, A.J. Vázquez-Vaamonde. The Scientific World Journal (2014); http://dx.doi.org/10.1155/2014/825745] and
- anhydrite from gypsum [A. López-Delgado, S. López-Andrés, I.Padilla, M. Álvarez, R. Galindo, A.J. Vázquez. Geomaterials 4 (2014) 82].

CSE has also been applied for:
- sintering of alumina [R. Roman, I. Cañadas, J. Rodríguez, M.T. Hernández, M. González. Solar sintering of alumina ceramics: Microstructural development. Solar Energy 82 (2008) 893-902] and
- cordietie-based ceramics [F. Almeida, N. Shohoji, J. Cruz, L. Guerra. Solar sintering of cordierite-based ceramics at low temperatures. Solar Energy 78 (2005) 351-361]
as well as to metallurgical processes such as:
- melting of aluminium from aluminium scrap [Funken, K.-H. et al., 2001. Aluminum remelting using directly solar heated rotary kilns. ASME J. Solar Energy Eng. 123, 117-124],
- production of titanium foams [I. García, E. Gracia-Escosa, M. Bayoda, A. Conde, M.A. Arenas, J. Damborenea, A. Romer, G. Rodríguez. Sustainable production of titanium foams for biomedical applications by Concentrated Solar Energy sintering. Materials Letters 185 (2016) 420-423],
- recovery of zinc from zinc containing materials [Tzouganatos, N. et al. 2013. Thermal recycling of Waelz oxide using concentrated solar energy J. Met. 65, 1733-1743],
- tempering of steels [A. Vázquez, G. P. Rodríguez, J. de Damborenea.Solar EnergyMaterials24 (1991) 751],
- production of titanium nitride [C. Sierra, A. J. Vázquez; Solar Energy Materials and Solar Cells 86 (2005) 86] and
- stainless steel [J. de Damborenea, A.J. Vázquez, B. Fernandez, Materials&Design15 (1994) 41]
- coatings, welding of steels and titanium alloys [A. Romero. I. García, M. A. Arenas, V. López, A. Vázquez. Solar Energy 95 (2013) 131] and
- thermal shock tests on intermetallic materials [D.G. Morris, A. López-Delgado, I. Padilla, M.A. Muñoz-Morris. Solar Energy 112 (2015) 246].

However, no research has been previously conducted aiming to use CSE for producing glasses or glassy materials such as glass frits or glass enamels. Recently, the feasibility of using concentrated solar radiation to provide a sustainable source of process heat for glass production was investigated [S.Q.S. Ahmad, R.J. Hand, C. Wieckert. Use of concentrated radiation for solar powered glass melting experiments. Solar Energy 109 (2014) 174-182]. Initial experiments involved melting a ternary simple soda-lime-silica (SLS) glass batch, which demonstrated that rapid and full conversion of the crystalline raw materials into an X-ray amorphous vitreous state was possible. The possibility of applying CSE to create a light-beam technology for obtaining art objects with a glass enamel coating has been also explored [V. I. Otmakhov. Firing of glass enamel by concentrated solar radiation. Glass and Ceramics, Vol. 72, Nos. 7-8, 266-268, (2015)]. However it is necessary to point out that the last two mentioned references do not use real CSE to achieve the necessary process energy. Instead, a high flux solar simulator consisting of xenon arc lamps, whose radiation spectrum is close to the solar spectrum, was used as source of heat.

According to the previous paragraphs there is a need to develop a process wherein real concentrated solar radiation is applied to achieve the energy needed for melting glass frits of different typology.

### BRIEF DESCRIPTION OF THE INVENTION

Throughout this description the following terms are defined as follows:
- raw materials: any materials that can be used for the manufacture of glass frits such as, but not limited to silica, alkaline/alkalinearth carbonates, alumina, boron oxide, calcium oxide, zirconia, titania, lead oxide, zinc oxide, feldspars and combinations thereof.
- decarbonation: process by which the raw materials used in form of carbonate, i.e. alkaline/alkalinearth carbonates, are decomposed to form the corresponding oxides.
- melting: process by means of which the solid raw materials are transformed into liquid phases.
- homogenization: process by means of which the different liquid phases mix together to get a single liquid melt with physical chemical properties being the same throughout the whole melt.

A first object of the present invention is a method for manufacturing glass frits comprising decarbonation, melting and homogenization of raw materials wherein the required high density power is provided by concentrated solar energy. In a preferred embodiment, the raw materials are contained in a crucible, being directly heated by means of a concentrated solar beam.

The raw materials are simultaneously submitted to:
- decarbonation
- melting
- homogenization
during a period ranging from 15 to 45 min at a temperature measured under the crucible bottom higher than 1400°C.

The measured temperature could be higher, up to 1800°C, depending on the concentrated solar beam.

The melted raw material is subsequently poured over water for cooling, thereby forming the glass frit.

A further object of the present invention is a device for carrying out the referred method for manufacturing glass frits, said device comprising:
- a solar flat mirror
- a solar beam shutter
- a solar radiation concentrator
- means for storing, feeding and containing the raw materials.

In a preferred embodiment, the solar radiation concentrator is a parabolic concentrator (1). In a further preferred embodiment:
- the means for storing the raw materials is a hopper (2)
- the means for feeding the raw materials is a feeder (3)
- the means for containing the raw materials is a crucible (4).

Particularly, the crucible (4) is a refractory crucible.

The device further comprises a water tank (6) for pouring the melted raw materials.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, elements, or steps. Additional objects, advantages and features of the invention will become apparent to those skilled in the art upon examination of the description or may be learned by practice of the invention. The following examples and drawings are provided by way of illustration and are not intended to be limiting of the present invention.

### BRIEF DESCRIPTION OF THE FIGURES

**Figure 1****:** scheme of the solar installation used for carrying out the process of manufacture frits with concentrated solar energy, wherein:
   1. Parabolic concentrator
   2. Raw materials hopper
   3. Raw materials feeder
   4. Crucible
   5. Crucible tipper arm
   6. Water tank with articulated support
   7. Solar beam shutter
   8. Security sliding floor
   9. Flat mirror
**Figure 2****:** Temperature-Time registers for the experiment to produce glass frits in solar furnace (thermocouple placed outside in the crucible bottom) and in electric furnace.
**Figure 3****:** XRD patterns of the glass frits obtained in solar furnace (gray) and electric furnace (black).
**Figures 4.1 and 4.2**: Thermal behaviour of the glass frits obtained in solar furnace (gray) and electric furnace (black).

### DETAILED DESCRIPTION OF THE INVENTION

The invention relates to a new process to obtain glass frits using concentrated solar energy, thereby involving several remarkable advantages in comparison with traditional processes. These traditional processes carry out the heating of raw materials in a reactor consisting of a crucible where those materials are heated, decarbonated, melted and homogenized to produce the final product (glass frit). Most of furnaces used in the commercial manufacture are both electric and fuel heated furnaces. In both cases there is a huge energy consumption and also a large production of CO₂.

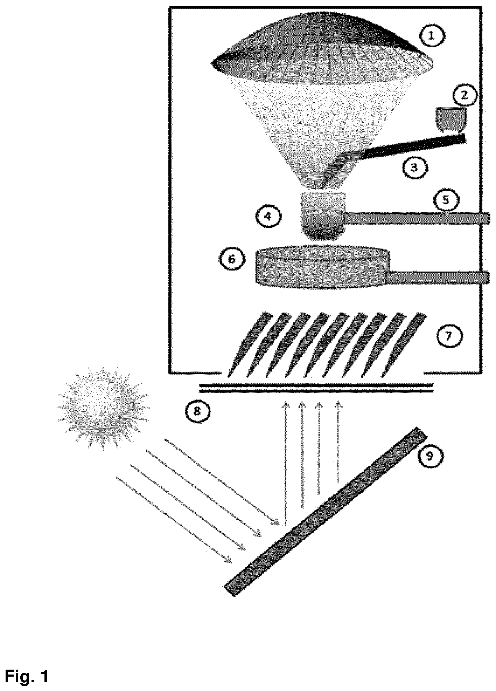

In the conventional process to produce frits, raw materials are placed inside a crucible, which is heated from outside to inside. In the present invention (see Fig. 1), using a vertical axis solar radiation parabolic concentrator (1), the heating is focalised directly on the raw materials batch, inside the crucible (4). Accordingly, a huge saving in energy consumption would be obtained because of the higher concentrated solar power density. Additionally, the process duration is drastically reduced because the raw materials are under the solar radiation focal spot, as soon as the crucible (4) is in vertical position and the shutter (7) is opened. Thus, they begin to be immediately heated by the concentrated solar beam coming from the parabolic concentrator (1). As the power density of this concentrated solar beam is much higher than in traditional furnaces, the heating rate is very high, and accordingly the time to achieve the desired reaction temperature is additionally reduced.

This invention proposes a new process for frits manufacture using a specific system of thermal solar energy consisting of a concentrating solar installation of vertical axis custom-built to the characteristics of the process. With this design it is possible to use a very high power density to heat directly and faster the raw materials up to high temperatures. The process comprises the direct heating of raw materials with concentrated solar energy for increasing the efficiency in time and energy consumption.

Basically the new frit production process is as follows:
1.- Raw material batch is introduced in the reactor, i. e., a crucible (4) located in the focal spot of the parabolic solar concentrator (1), by means of a raw materials feeder (3), which one finished the load is displaced to a position outside the parabolic concentrator.
2.- The solar beam shutter (7) is opened to allow solar beam to be redirected from the flat mirror (9) to the parabolic concentrator (1).
3.- The high solar power density existing in the focal spot produces a fast heating, which leads to the simultaneous decarbonation and melting of raw materials and homogenization of the final melt.
3.- Once the melt reaches the required temperature, it is fast cooled by pouring on a water tank (6) to produce a frit. The pouring is carried out by means of the crucible tipper arm (5) which rotates the crucible (4) to permit that the melt pours.

Once the crucible (4) is again in vertical position, it is fulfilled with new raw material mixture and the process follows by step "1 ", while the water tank (6) is displaced by an articulate support to a position outside the parabolic concentrator.

With this new process, time required for raw material heating, decarbonation melting and homogenization is extremely short. Consequently, the transformation rate of raw materials in the final glass is much higher than in traditional processes. As it is shown in the preferred embodiments, none of the original raw materials are detected in the final frit. Notwithstanding the shorter process duration, the quality of the final product is similar to that of the same frits melted by a conventional process.

The process for preparing glass frits according to the present invention has several advantages compared to those using conventional furnaces:
1.- Because of the use of solar energy there is not any direct or indirect CO₂ emission due to energy generation. This is a clear benefit from the point of view of green house effect. This benefit is very important since glass frit industry is a high consumer of fossil fuel because a high process temperature is required. Even if furnaces are electrically heated there is a hidden fossil fuel consumption because about 35 % of electricity is produced with fossil fuels and the production yield of those plants is about 40 %. Additionally, the losses associated to energy transformation and transport must be considered.
2.- The second benefit is that the only cost of this new process is the installation and its maintenance.
3.- Raw materials particles have an irregular surface acting as a perfect sink of solar radiation and increasing the global heat transference because there is not any reflection. Even if the concentrated solar beams heat a solid surface, e. g., the inside crucible wall as happens with the radiation of flames in gas furnaces or the heating resistance in electric furnaces, the heat losses would be slightly smaller. Thereby, a reduction in total energy involved in the process is achieved and there is a better global heat transference throughout the surface of raw materials. Traditional processes require higher temperature at the outside crucible wall. The conduction coefficient of the crucible material controls the heating time because conduction coefficient is always the controlling step. However, a higher temperature at the external wall of the crucible is needed for heating the raw material batch inside the crucible. It is well known that an increment in temperature means a cost increment in any process.
4.- When raw materials grains in the top of the crucible are melted, the liquid phase originated goes down along the pores heating the grains located in lower layers. This melted liquid is going down vertically heating all the grains it finds. Consequently, the non-reacted raw materials are faster heated due to the larger surface contact between the melted material and the grains surface. The global energy transference is much higher than if the heating were done throughout the walls of crucible as in traditional process, where this effect takes place only near the wall.

Additionally the higher power density of the concentrated solar beam increases the global heat transference to the raw materials batch, with a reduction in heating time and the subsequent increment in productivity.
5.- Because the raw material batch is directly heated, the outside temperature of the crucible is lower than in traditional processes, it means lower heat losses and in consequence a reduction in energy consumption of the process.
6.- Concerning the crucible cost, traditional processes use materials with high thermal resistance and simultaneously with a high conduction coefficient. Both characteristics means higher price. In the present invention, raw material batch is directly heated and the crucible can be made with lower cost insulating refractory material. Moreover there is a very important reduction in the mechanical erosion and chemical corrosion of the crucible inner wall increasing its operation life.
7.- The final consequence of those previous advantages is that this new process leads to a reduction higher than 80% in the reaction time (heating, decarbonation and melting) than means an increment in productivity of the process.

### EMBODIMENTS OF THE INVENTION

The chemical composition of commercial glass frits includes the combination of several components:
- Glass formers: SiO₂, B₂O₃
- Fluxing oxides: Na₂O, K₂O, PbO, B₂O₃, Li₂O
- Stabilizers: CaO, BaO, MgO, PbO, Al₂O₃, ZnO
- Opacifyers: ZrO₂, SnO₂, TiO₂
- Devitrifying oxides: ZnO, CaO, BaO, MgO, TiO₂

According to different physical and chemical characteristics, commercial frits are classified in the following six groups:
1- Crystalline frits
2- White of zirconium frits
3- Bright, transparent, middle fusibility frits
4- Fluxing frits
5- Reactive fluxing frits
6- Matte frits

The chemical composition of the different groups is indicated in Table 1.

**Table 1. Chemical composition interval (wt. %) of commercial glass frits.**

| Oxide | Crystalline | White of zirconium | Middle fusibility | Fluxing | Reactive fluxing | Matte |
|---|---|---|---|---|---|---|
| Alkaline | 3-6 | 3-7 | 3-7 | 0-15 | --- | 0-10 |
| CaO | 4-8 | 4-8 | 3-6 | 0-10 | --- | 0-20 |
| BaO | 0-2 | 0-2 | 0-2 | --- | --- | --- |
| ZnO | 4-8 | 4-8 | 3-6 | 0-5 | --- | 0-30 |
| PbO | 0-20 | 0-10 | 30-40 | 0-85 | 45-69 | 0-35 |
| Al₂O₃ | 4-8 | 4-8 | 2-4 | --- | --- | 0-5 |
| B₂O₃ | 5-15 | 10-15 | 5-10 | 0-30 | 20 | 2-40 |
| SiO₂ | 50-60 | 50-55 | 40-50 | 15-50 | 11-35 | 30-60 |
| ZrO₂ | --- | 7-12 | --- | --- | --- | 0-5 |
| TiO₂ | --- | --- | --- | --- | --- | 0-10 |

For the embodiments of the present invention, glass compositions belonging to five different frits groups (Table 1) were formulated, namely, crystalline (C); white of zirconium (WZr); middle fusibility (MF); fluxing (F) and matte of titanium (MTi). The compositions of the starting frits are shown in Table 2.

**Table 2. Starting chemical composition (wt. %) of the investigated glasses.**

| Oxide | C | WZr | MF | F | MTi |
|---|---|---|---|---|---|
| SiO₂ | 50 | 50 | 40 | 50 | 40 |
| B₂O₃ | 15 | 15 | 10 | 20 | 20 |
| Al₂O₃ | 4 | 4 | 2 | --- | 2 |
| Na₂O | 3 | --- | 4 | 10 | 2 |
| K₂O | --- | --- | --- | 10 | --- |
| Li₂O | 3 | 7 | 3 | --- | 2 |
| CaO | 8 | 4 | 6 | 10 | 2 |
| BaO | 2 | 2 | 2 | --- | 25 |
| ZnO | 5 | 8 | 3 | --- | 7 |
| PbO | 10 | --- | 30 | --- | --- |
| ZrO₂ | --- | 10 | --- | --- | --- |
| Theoretical T_{melting} (°C) | 993 | 1079 | 822 | 880 | 885 |

The raw materials used for obtaining the glass frit were low iron content silica sand, reagent grade Al₂O₃, B₂O₃, ZnO, PbO and ZrO₂. Alkali and alkaline earth elements were introduced as reagent grade carbonates. The mixtures were homogenised in a planetary ball mill (TURBULA) for 15 min. For comparison of the properties of final frits batches were melted in parallel in a vertical axis parabolic solar furnace and in a traditional electric furnace. In both cases, batches were melted in tabular alumina crucibles. Once melted at specific temperature, the melted liquid was poured on cool water.

For carrying out the preparation of frits using concentrated solar energy, a vertical axis parabolic solar furnace was used.

A scheme of the solar installation used for the manufacture frits with concentrated solar energy is shown in Fig. 1, wherein the concentrated solar energy is provided by means of a flat mirror (9), a solar beam shutter (7) and a parabolic concentrator (1).

The raw material is stored into a raw material hopper (2) and is loaded to the crucible (4), placed in the focal spot of the concentrated solar beam, by means of a raw materials feeder (3). Once the load is finished, the raw material feeder (3) is displaced to a position in which it is not damaged by the concentrated solar beam. Additionally, no shadows should are originated by the position of this feeder (3).

Once the reaction and melting is concluded and in order to carry out the fast cooling of the final melt, an articulated support displaces a water tank (6) to the adequate position in which the final melt is poured.

The pouring of the final melt over water for cooling, is performed by using a crucible tipper arm (5) that supports the crucible (4).

This facility was located in the Medium Size Solar Furnaces (MSSFs) of CNRS-PROMESS Solar facilities (Font Romeu-Odeillo, France).This solar furnace is a 0.9 kW installation equipped with a parabolic reflector of 1.5 m diameter that produces a focal spot, ca. 15 mm in diameter, with a very high power density ca. 1000 W/m². Incident solar radiation has a shutter positioned between the parabolic concentrator and the flat mirror (heliostat). The heliostat follows the sun track and it reflects the sun radiation vertically to the parabolic concentrator. To measure the temperature under the crucible bottom a type K thermocouple was set.

Once the raw materials were melted inside the crucible, the melt was maintained few minutes under solar radiation exposure to get homogenization and then it was poured on water to produce the glass frit.

For comparison of the properties of final frits and the efficiency of the process, the same glass frit compositions were melted in an electric furnace. In both cases, the same type and dimensions of the crucible and batch weight were employed.

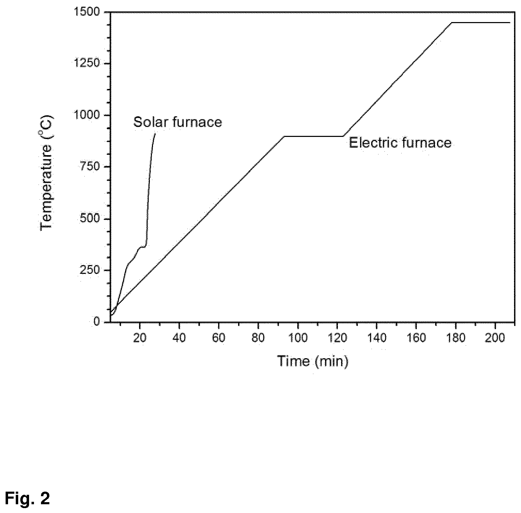

Figure 2 shows the thermal schedule followed for obtaining the frits in both solar and electric furnaces. As it can be seen, the use of concentrated solar energy produces a reduction of the time process higher than 80% in comparison to the conventional electric furnace.

### Characterization of final frits

The results of the characterization of different frits prepared by using both concentrated solar and electric furnace are shown. The aim of this characterization is to determine if the type of energy, density power and thermal schedule used in the preparation of frits leads to materials with the same physical-chemical characteristics.

The chemical analysis of the resulting glass frits was determined by X-ray fluorescence (XRF) using a Bruker S8 Tiger spectrometer on pressed pellets of powder glass samples (<63 µm). The determination of B and Li was performed by optical emission inductively coupled plasma spectrometry (ICP-OES) in a Varian 725-ES spectrometer. The evaluation of the amorphous nature of the frits after melting was performed by X-ray diffraction (XRD) using Bruker D8 Advance equipment with Ni-filtered Cu Kα radiation operating at 30 mA and 40 kV. Data were recorded in the 5-60° 2θ range (step size 0.019732° and 0.5 s counting time for each step).

The thermal stability of the glass frits was analysed by differential thermal analysis (DTA) on powder (<63 µm) frit samples. DTA runs were performed from room temperature to 1200 °C, at a heating rate of 50°C·min⁻¹ under flowing air (100) in TA Instrument (mod SDT-Q600).

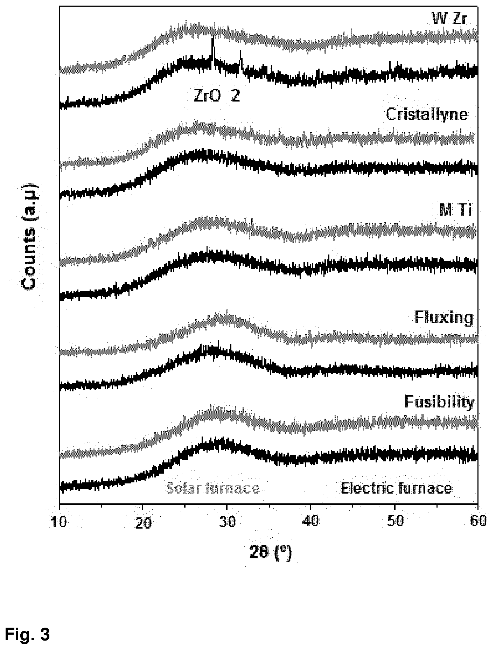

Figure 3 shows the XRD patterns corresponding to frits obtained in both solar and electric furnace. It can be observed that the XRD profiles of all frits (except the corresponding to WZr frit prepared in electric furnace) only show the characteristic amorphous halo of vitreous materials, in which any diffraction peaks due to crystalline phases are not detected. However, the XRD profile of the frit with the higher melting temperature (WZr) shows small diffraction peaks attributable to ZrO₂, this indicating that this phase was not completely reacted during the melting process in the electric furnace and it remains as a non-reacted material in the final glass frit.

This is an additional advantage because this new process will allow melting frit compositions with high content of refractory oxide, which are hardly melted in conventional furnaces.

On the other hand, for each different type of frits, it can be seen that the XRD profiles are very similar. It is worthy that in spite of the shorter time used in the new solar melting process, the structure of the glass network of resulting frits is very similar.

The chemical composition of the final frits prepared in both solar and electric furnace and determined by XRF and ICP-OES are show in Table 3. The theoretical initial composition of the raw materials mixtures is also included.

**Table 3. Chemical composition (% wt) of the frits prepared in both solar and electric furnace.**

| Oxide (% wt) | Theoretical composition | Electric furnace | Solar furnace |
|---|---|---|---|
| Fluxing Frit | | | |
| SiO₂ | 50 | 47.04 | 53.72 |
| B₂O₃ | 20 | 11.80 | 13.4 |
| Al₂O₃ | 0 | 15.00 | 2.24 |
| Na₂O | 10 | 9.07 | 11.1 |
| K₂O | 10 | 6.67 | 8.74 |
| CaO | 10 | 9.35 | 10.03 |

| White of Zirconium Frit | | | |
|---|---|---|---|
| SiO₂ | 50 | 43.47 | 50.52 |
| B₂O₃ | 15 | 8.74 | 10.6 |
| Al₂O₃ | 4 | 22.5 | 5.71 |
| Li₂O | 7 | 3.67 | 5.13 |
| CaO | 4 | 3.34 | 4.39 |
| BaO | 2 | 1.54 | 2.29 |
| ZnO | 8 | 6.40 | 8.10 |
| ZrO₂ | 10 | 8.27 | 11.25 |

| Crystalline Frit | | | |
|---|---|---|---|
| SiO₂ | 50 | 50.30 | 52.60 |
| B₂O₃ | 15 | 9.75 | 11.80 |
| Al₂O₃ | 4 | 11.50 | 5.83 |
| Na₂O | 3 | 3.60 | 3.97 |
| Li₂O | 3 | 1.83 | 2.59 |
| CaO | 8 | 4.33 | 4.43 |
| BaO | 2 | 1.91 | 2.33 |
| ZnO | 5 | 5.27 | 5.38 |
| PbO | 10 | 10.49 | 10.05 |

| Middle Fusibility Frit | | | |
|---|---|---|---|
| SiO₂ | 40 | 37.88 | 40.19 |
| B₂O₃ | 10 | 5.84 | 7.12 |
| Al₂O₃ | 2 | 11.0 | 3.98 |
| Na₂O | 4 | 4.10 | 4.70 |
| Li₂O | 3 | 1.71 | 2.24 |
| CaO | 6 | 5.80 | 6.23 |
| BaO | 2 | 1.71 | 2.24 |
| ZnO | 3 | 3.00 | 3.16 |
| PbO | 30 | 28.18 | 29.52 |

| Matte of Titanium Frit | | | |
|---|---|---|---|
| SiO₂ | 40 | 41.09 | 41.81 |
| B₂O₃ | 20 | 14.60 | 15.1 |
| Al₂O₃ | 2 | 7.76 | 4.02 |
| Na₂O | 2 | 2.13 | 2.65 |
| Li₂O | 2 | 1.28 | 1.63 |
| ZnO | 2 | 1.69 | 1.69 |
| PbO | 25 | 24.35 | 25.59 |
| TiO₂ | 7 | 6.44 | 6.86 |

It can be seen that the melting process in a conventional electric furnace originates a high level of corrosion of the crucible wall by the melt, as denoted by the noticeable increasing of alumina content in the final frit composition. Thus, alumina is detected even in frit composition in which alumina was not added to the raw materials batch. In general the corrosion of crucible is higher as the viscosity of the melt is lower, as expected.

It is also observed B₂O₃ losses by volatilization of boron that are much higher when the melting process is performed in the electric furnace than in the glass frits obtained by concentrated solar energy. This result can be attributable to the longer time required for melting in electric furnace. As above mentioned, the use of high power density, as provided by a solar concentrator, to carry out the manufacture of frits allows reducing the process time in about 80% in contrast with the long time required to obtain the same material in a conventional electric furnace. The variation of the rest of components in the composition of frits corresponds to the adjustment of the mass balance.

Accordingly, it can be concluded that the use of concentrated solar energy to manufacture glass frits presents extra advantages as: lower corrosion of crucible wall and lower volatilization of boron in the melting process.

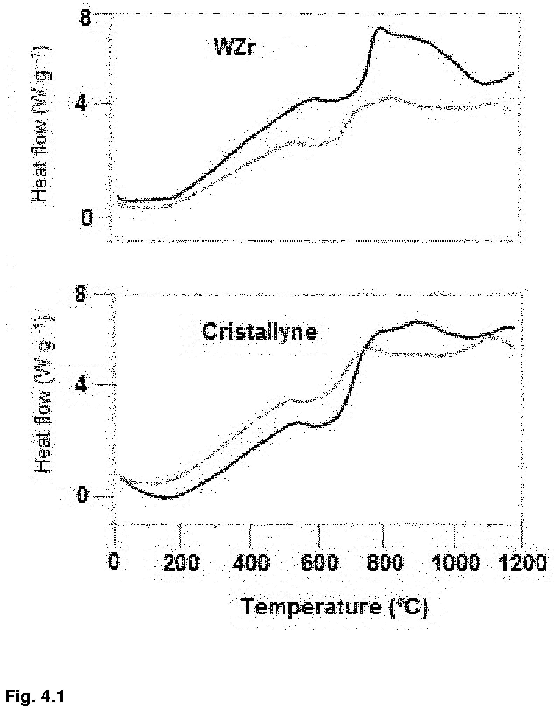

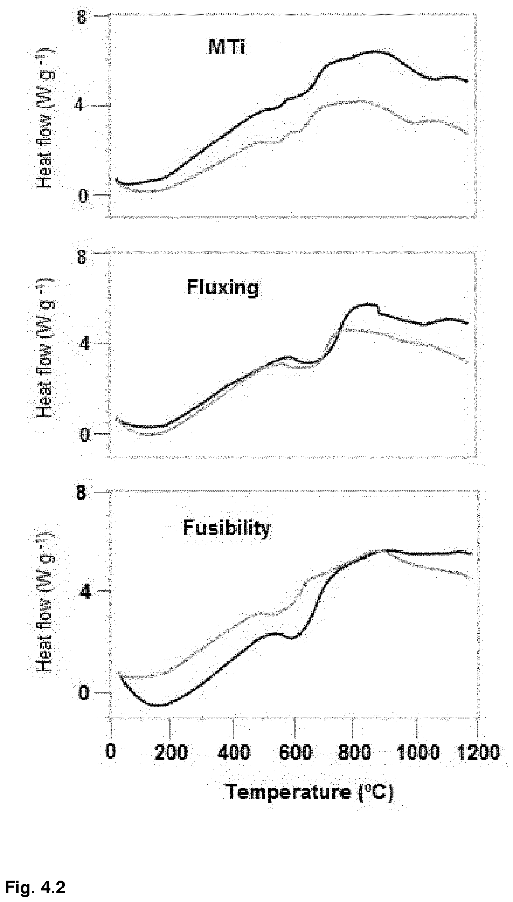

The thermal behaviour of the glass frits was evaluated by DTA. Figures 4.1 and 4.2 show the DTA curves of the glass frits produced in both solar and electric furnace. In general, the curves corresponding to each frit type shows a similar profile, which again denotes that in spite of the shorter time required for completing the melting process in the solar furnace, the structure of the final frits must be analogous to that of frits processed in a electric furnace. All the thermograms show the distinctive endothermic fall in the baseline corresponding to the glass transition temperature (Tg).

Table 4 collects the values of Tg for the different glass frits. It can be see that in all cases, glass frits prepared by the use of concentrated solar energy show Tg values lower than those corresponding to frits produced in electric furnace. This result is likely due to differences observed in glass frits compositions.

**Table 4. Values of Tg (°C) of the glass frits produced in both solar and electric furnace**

| Furnace | MF | F | MTi | C | WZr |
|---|---|---|---|---|---|
| Solar | 490 | 574 | 501 | 527 | 554 |
| Electric | 552 | 606 | 512 | 553 | 604 |

As above mentioned, the short thermal schedule used in solar furnace leads to a lower corrosion of the melt against the walls of the refractory crucibles, thus incorporating low content of alumina to the final glass frit composition. Moreover, boron volatilization is also lower during the melting in the solar furnace. As results, the final composition of glass frits prepared in solar furnace shows higher content of fluxing oxides and they will lead to lower viscosity liquids and therefore, to lower Tg values. At higher temperatures, the DTA curves show different exothermic bands indicating that subsequent heat treatments of these glass frits could lead to the devitrification of different crystalline phases.

## Claims

1. Method for manufacturing glass frits comprising decarbonation, melting and homogenization of raw materials wherein the required high density power is provided by concentrated solar energy.

2. Method for manufacturing glass frits according to claim 1, wherein the raw materials are contained in a crucible (4), said raw materials being directly heated by means of a concentrated solar beam.

3. Method for manufacturing glass frits according to either claims 1 or 2, wherein the raw materials are simultaneously submitted to:
- decarbonation
- melting
- homogenization
during a period ranging from 15 to 45 min at a temperature measured under the crucible bottom higher than 1400°C.

4. Method for manufacturing glass frits according to any of the preceding claims, wherein the melted raw material is subsequently poured over water for cooling, thereby forming the glass frit.

5. Device for carrying out a method for manufacturing glass frits as defined in claims 1 to 5, said device comprising:
- a solar flat mirror (9)
- a solar beam shutter (7)
- a solar radiation concentrator (1)
- means for storing, feeding and containing the raw materials.

6. Device according to claim 5, wherein the solar radiation concentrator is a parabolic concentrator (1).

7. Device according to either claims 5 or 6, wherein:
- the means for storing the raw materials is a hopper (2)
- the means for feeding the raw materials is a feeder (3)
- the means for containing the raw materials is a crucible (4).

8. Device according to claim 7, wherein the crucible (4) is a refractory crucible.

9. Device according to any of claims 5 to 8, wherein it further comprises a water tank (6) for pouring the melted raw materials.
